# EUROPEAN PATENT APPLICATION

(11) **EP 4 751 829 A1**
(43) Date of publication of application: **03.06.2026**
(21) Application number: 24216589.2
(22) Date of filing: 29.11.2024
(51) Int. Cl.: B23C 5/20, B23C 5/06

(54) **DOUBLE-SIDED CUTTING INSERT AND MILLING TOOL**

(71) Applicant: Seco Tools AB, 737 82 Fagersta (SE)
(72) Inventor: JAKOBI, Tobias, SE-737 82 Fagersta (SE); DANIELSSON, Niklas, SE-737 82 Fagersta (SE)
(74) Representative: Sandvik

(57) **Abstract**

A double-sided cutting insert for use in milling with quadratic basic shape and eight different working positions. The cutting insert (1) comprises a peripheral surface (10), which extends around the cutting insert between first and second major faces (2, 3) and has four main side faces (11a-11d). One main cutting edge and one surface-wiping cutting edge are formed at an intersection between each main side face and the first major face (2) and at an intersection between each main side face and the second major face (3). Each main side face comprises a planar side abutment surface (13, 14), which extends between two corner side faces (12) of the cutting insert, and two inclined clearance surfaces (40, 50, 60, 70) located along and on opposite sides of the side abutment surface (13, 14), each clearance surface being convexly curved as seen in any plane that is perpendicular to a centre axis (C) of the cutting insert and extends across any part of the clearance surface.

## Description

### FIELD OF THE INVENTION AND PRIOR ART

The present invention relates to a double-sided cutting insert for milling according to the preamble of claim 1. The invention also relates to a milling tool comprising such a double-sided cutting insert.

A milling tool is a rotating cutting tool, which may be provided with one or more cutting inserts detachably mounted in a respective insert seat in a tool body of the milling tool. One type of cutting insert that may be used in square-shoulder milling and face milling is a double-sided cutting insert with an essentially quadratic basic shape. A cutting insert of this type is previously known, for instance from IN 202041011793 A, and is turnable into eight different working positions, wherein four working positions are provided by four different sets of cutting edges formed at an interface between a peripheral surface and a first major face of the cutting insert and four further working positions are provided by four other different sets of cutting edges formed at an interface between the peripheral surface and a second major face of the cutting insert, wherein each such set of cutting edges comprises a main cutting edge and a surface-wiping cutting edge with an intermediate curved corner cutting edge. When a cutting edge included in one such set of cutting edges has been worn out, the cutting insert may be repositioned in its insert seat and mounted in a new working position with another one of the different sets of cutting edges in an active cutting position.

A double-sided cutting insert of the above-mentioned type offers a large number of different working positions and may be produced in a comparatively simple and cost-efficient manner. This type of cutting insert has to be given a negative axial tipping-in angle and a negative radial tipping-in angle when mounted in an insert seat in a tool body of a milling tool, which implies that the cutting insert has to be tipped in axially forwardly and radially outwardly in the tool body to get a clearance. The negative axial tipping-in angle is necessary in order to create relief behind the active surface-wiping cutting edge and the negative radial tipping-in angle is necessary in order to create relief behind the active main cutting edge.

When a double-sided cutting insert of the above-mentioned type is in a working position with one of the surface-wiping cutting edges in an active surface wiping position, an inactive main cutting edge on the same main side face as the active surface-wiping cutting edge will be moved closely above a machined workpiece surface that is levelled by the active surface-wiping cutting edge. There has to be a proper clearance between said inactive main cutting edge and the workpiece surface in order to prevent small fragments of workpiece material from getting stuck between the inactive main cutting edge and the workpiece surface. If small fragments of workpiece material would get stuck between the inactive main cutting edge and the workpiece surface and dragged along by the cutting insert during the rotation of the milling tool, the workpiece surface and the inactive main cutting edge could be subjected to damages.

### OBJECT OF THE INVENTION

The object of the present invention is to provide a double-sided cutting insert of the above-mentioned type that has a new and favourable design.

### SUMMARY OF THE INVENTION

According to the invention, said object is achieved by means of a double-sided cutting insert having the features defined in claim 1.

The double-sided cutting insert according to the invention has an essentially quadratic basic shape and is turnable into eight different working positions and comprises:
- first and second major faces arranged on opposite sides of the cutting insert and serving as top and bottom faces of the cutting insert, wherein the cutting insert has a centre axis that extends between the first and second major faces and a median plan that extends halfway between the first and second major faces perpendicularly to the centre axis, wherein the cutting insert has 90° rotational symmetry about the centre axis, wherein the first major face comprises a substantially planar first tangential abutment surface extending in a first plane that is perpendicular to the centre axis, and wherein the second major face comprises a substantially planar second tangential abutment surface extending in a second plane that is perpendicular to the centre axis;
- a peripheral surface extending around the cutting insert between the first and second major faces and comprising:
   - four main side faces, a first pair of which being arranged opposite to each other on two opposite sides of the cutting insert and a second pair of which being arranged opposite to each other on two other opposite sides of the cutting insert, wherein the cutting insert has a first transverse plane that extends halfway between the two main side faces in said first pair and contains the centre axis of the cutting insert and a second transverse plane that extends halfway between the two main side faces in said second pair and contains the centre axis of the cutting insert, and wherein each main side face in said first pair has 180° rotational symmetry about a first imaginary reference axis that extends along a line of intersection between the median plane and the second transverse plane, and each main side face in said second pair has 180° rotational symmetry about a second imaginary reference axis that extends along a line of intersection between the median plane and the first transverse plane, and
   - four corner side faces, each of which being arranged between two adjacent main side faces;
- four first main cutting edges formed at an intersection between a respective one of the four main side faces and the first major face;
- four second main cutting edges formed at an intersection between a respective one of the four main side faces and the second major face;
- four first surface-wiping cutting edges formed at an intersection between a respective one of the four main side faces and the first major face;
- four second surface-wiping cutting edges formed at an intersection between a respective one of the four main side faces and the second major face;
- four first curved corner cutting edges formed at an intersection between a respective one of the four corner side faces and the first major face, wherein each one of the first curved corner cutting edges is located between one of the first main cutting edges and one of the first surface-wiping cutting edges with the first curved corner cutting edge located ahead of the adjacent first main cutting edge and behind the adjacent first surface-wiping cutting edge, as seen in a clockwise direction about the centre axis of the cutting insert when viewing the first major face in a plan view along the centre axis; and
- four second curved corner cutting edges formed at an intersection between a respective one of the four corner side faces and the second major face, wherein each one of the second curved corner cutting edges is located between one of the second main cutting edges and one of the second surface-wiping cutting edges with the second curved corner cutting edge located ahead of the adjacent second main cutting edge and behind the adjacent second surface-wiping cutting edge, as seen in a clockwise direction about the centre axis of the cutting insert when viewing the second major face in a plan view along the centre axis,

In this context, the cutting insert is considered to have 90° rotational symmetry about the centre axis even if any of its faces is provided with one or more minor markings, for instance in the form of recesses, that lack 90° rotational symmetry about the centre axis, on condition that these one or more markings have no relevance for the functioning of the cutting insert.

Furthermore, in this context, each main side face in said first pair is considered to have 180° rotational symmetry about the first imaginary reference axis even if any of these main side faces is provided with one or more minor markings, for instance in the form of recesses, that lack 180° rotational symmetry about the first imaginary reference axis, on condition that these one or more markings have no relevance for the functioning of the cutting insert. In the corresponding manner, each main side face in said second pair is considered to have 180° rotational symmetry about the second imaginary reference axis even if any of these main side faces is provided with one or more minor markings, for instance in the form of recesses, that lack 180° rotational symmetry about the second imaginary reference axis, on condition that these one or more markings have no relevance for the functioning of the cutting insert.

Each main side face in said first pair comprises a substantially planar first side abutment surface that is parallel to the first transverse plane and extends from one of the four corner side faces to another one of the four corner side faces, said first side abutment surface having a first end, through which it adjoins to the former corner side face, and an opposite second end, through which it adjoins to the latter corner side face. In the corresponding manner, each main side face in said second pair comprises a substantially planar second side abutment surface that is parallel to the second transverse plane and extends from one of the four corner side faces to another one of the four corner side faces, said second side abutment surface having a first end, through which it adjoins to the former corner side face, and an opposite second end, through which it adjoins to the latter corner side face.

According to the invention, each main side face in said first pair comprises an inclined clearance surface that extends between the first side abutment surface on the same main side face and the first major face all along this first side abutment surface, wherein this clearance surface:
- has a first end at the first end of the associated first side abutment surface, and an opposite second end at the second end of the associated first side abutment surface,
- has a first longitudinal edge, through which it adjoins to the first major face, and an opposite second longitudinal edge, through which it adjoins to the associated first side abutment surface, these first and second longitudinal edges having a respective first end at the first end of the clearance surface and a respective second end at the second end of the clearance surface, wherein said first longitudinal edge has a first section that extends from the first end of the first longitudinal edge in a direction toward the second end thereof and that consists of one of said four first surface-wiping cutting edges, and an adjacent second section that extends from the second end of the first longitudinal edge in a direction toward the first end thereof and that consists of one of said four first main cutting edges,
- is inclined outwards from the first major face, such that its first longitudinal edge is located closer to the first transverse plane than its second longitudinal edge, as seen in any plane that is parallel to the second transverse plane and extends across the clearance surface,
- is convexly curved, as seen in any plane that is perpendicular to the centre axis of the cutting insert and extends across any part of the clearance surface,
- has such shape that a perpendicular distance between said second longitudinal edge and said second plane has a minimum at the second end of the second longitudinal edge and a maximum at a peak point on the second longitudinal edge located in a plane that is parallel to the second transverse plane and intersects said first longitudinal edge in a point within the middle third of the longitudinal extension of said first section of the first longitudinal edge, wherein said perpendicular distance is larger at the first end than at the second end of the second longitudinal edge, and
- has such shape that said second longitudinal edge is gradually approaching said second plane when moving along the second longitudinal edge from said peak point on the second longitudinal edge to the first end thereof, and when moving along the second longitudinal edge from said peak point on the second longitudinal edge to the second end thereof.

The above-mentioned clearance surface completely separates the associated first side abutment surface from the first major face. Furthermore, the above-mentioned clearance surface has an asymmetric shape with a generally smaller width along the associated surface-wiping cutting edge and a generally larger width along the associated main cutting edge.

The first longitudinal edge is at its first end connected to one of the four first curved corner cutting edges, and at its opposite second end connected to another one of the four first curved corner cutting edges.

When the double-sided cutting insert is in a working position with one of the surface-wiping cutting edges in an active surface wiping position, an inactive main cutting edge on the same main side face as the active surface-wiping cutting edge will be moved closely above a machined workpiece surface that is levelled by the active surface-wiping cutting edge. As previously mentioned, there has to be a proper clearance, a so-called bottom clearance, between said inactive main cutting edge and the workpiece surface in order to prevent small fragments of workpiece material from getting stuck between the inactive main cutting edge and the workpiece surface and thereby subject the inactive main cutting edge and the workpiece surface to damages. This bottom clearance is improved by the part of the inclined clearance surface located along said inactive main cutting edge, which will reduce the risk of damages to this inactive main cutting edge and to the workpiece surface.

The above-mentioned convex curvature of the inclined clearance surface implies that the associated surface-wiping cutting edge will be convexly curved as seen in a plan view of the cutting insert along the centre axis. By choosing the convex curvature of the clearance surface such that the perpendicular distance between said second longitudinal edge of the clearance surface and said second plane has a maximum at a peak point on the second longitudinal edge located in a plane that is parallel to the second transverse plane and intersects said first longitudinal edge of the clearance surface in a point within the middle third of the longitudinal extension of said first section of the first longitudinal edge, the first longitudinal edge will, as seen in a plan view of the cutting insert along the centre axis, have a peak within the middle third of the longitudinal extension of the first section of the longitudinal edge, wherein the latter peak constitutes the point on the first longitudinal edge where the perpendicular distance between the first longitudinal edge and the first transverse plane has a maximum. It is hereby possible to make sure that the axially foremost point of the cutting insert, when mounted in a dedicated insert seat in a tool body of a milling tool, is located at a central area of the active surface-wiping cutting edge, which is favourable with respect to the levelling achieved by the active surface-wiping cutting edge.

In the following, the above-mentioned clearance surface is referred to as the first clearance surface.

As a consequence of the above-mentioned symmetries of the cutting insert, each main side face in said first pair also comprises a second inclined clearance surface that has a shape corresponding to the shape of the above-described first clearance surface and that extends between the first side abutment surface on the same main side face and the second major face all along this first side abutment surface. As a further consequence of the above-mentioned symmetries of the cutting insert, each main side face in said second pair comprises an inclined clearance surface that has a shape corresponding to the shape of the above-described first clearance surface and that extends between the second side abutment surface on the same main side face and the first major face all along this second side abutment surface, and an additional inclined clearance surface that has a shape corresponding to the shape of the above-described first clearance surface and that extends between the second side abutment surface on the same main side face and the second major face all along this second side abutment surface.

Each one of the above-mentioned clearance surfaces is preferably a ground surface, i.e. a surface formed by grinding. The fact that each one of the above-mentioned clearance surfaces extends all along the associated side abutment surface implies that it can be formed by grinding in a continuous and uninterrupted grinding motion, which facilitates the manufacturing of the cutting insert. Preferably, also the first and second side abutment surfaces are ground surfaces. As is known to a person skilled in the art, a machined surface can be identified as a ground surface by the presence of grinding lines on the surface.

In order to further facilitate the grinding of the above-mentioned clearance surfaces, the clearance surfaces located on a respective one of the main side faces along the periphery of the first major face are suitably connected to each other through corresponding inclined clearance surfaces on the intermediate corner side faces, such that these clearance surfaces on the main side faces and the associated intermediate clearance surfaces on the corner side faces together extend all along the periphery of the first major face and thereby can be formed consecutively by grinding in a continuous and uninterrupted grinding motion. In this case, also the clearance surfaces located on a respective one of the main side faces along the periphery of the second major face are connected to each other through corresponding inclined clearance surfaces on the intermediate corner side faces, such that these clearance surfaces on the main side faces and the associated intermediate clearance surfaces on the corner side faces together extend all along the periphery of the second major face and thereby can be formed consecutively by grinding in a continuous and uninterrupted grinding motion.

The cutting edges located along the periphery of the first major face form four different first sets of cutting edges, each such first set of cutting edges comprising one first main cutting edge, one first curved corner cutting edge and one first surface-wiping cutting edge, wherein the first curved corner cutting edge has a first end connected to the adjacent first main cutting edge and a second end connected the adjacent first surface-wiping cutting edge. The cutting edges located along the periphery of the second major face form four different second sets of cutting edges, each such second set of cutting edges comprising one second main cutting edge, one second curved corner cutting edge and one second surface-wiping cutting edge, wherein the second curved corner cutting edge has a first end connected to the adjacent second main cutting edge and a second end connected the adjacent second surface-wiping cutting edge. Thus, the cutting insert is in total provided with eight different sets of cutting edges, each of which comprising a main cutting edge and a surface-wiping cutting edge with an intermediate curved corner cutting edge. In each one of the different working positions of the cutting insert, the cutting edges of one of the eight different sets of cutting edges constitute the active cutting edges of the cutting insert.

The above-mentioned centre axis of the cutting insert extends between a centre point of the first major face and a centre point of the second major face. By a centre point is meant a centroid or a geometric centre. The cutting insert may be provided with a through hole, which extends centrally through the cutting insert between the first and second major faces, wherein a centre axis of the through hole coincides with the centre axis of the cutting insert.

The double-sided cutting insert according to the present invention may have the form of a square-shoulder milling insert or a face milling insert.

According to an embodiment of the invention, the peak point on said second longitudinal edge of said first clearance surface is located in a plane that is parallel to the second transverse plane and intersects said first longitudinal edge of the first clearance surface in a midpoint of the first section of the first longitudinal edge.

According to another embodiment of the invention, the first section of said first longitudinal edge of said first clearance surfaces is parallel to the median plane, as seen in a lateral view of the cutting insert along the first imaginary reference axis toward the associated main side face. Thus, in this case, each one of the first surface-wiping cutting edges has its extension in a plane that is parallel to the median plane, and each one of the second surface-wiping cutting edges has its extension in another plane that is parallel to the median plane.

According to another embodiment of the invention, the first section of said first longitudinal edge of said first clearance surface is located further from the median plane than said first plane. Thus, in this case, each one of the first surface-wiping cutting edges is located further from the median plane than the first tangential abutment surface on the first major face, and each one of the second surface-wiping cutting edges is located further from the median plane than the second tangential abutment surface on the second major face, which in its turn implies that the first tangential abutment surface is positioned lower on the first major face than the first surface-wiping cutting edges, and that the second tangential abutment surface is positioned lower on the second major face than the second surface-wiping cutting edges.

According to another embodiment of the invention, the first section of said first longitudinal edge of said first clearance surface is located closer to the median plane than said first plane. Thus, in this case, each one of the first surface-wiping cutting edges is located closer to the median plane than the first tangential abutment surface on the first major face, and each one of the second surface-wiping cutting edges is located closer to the median plane than the second tangential abutment surface on the second major face, which in its turn implies that the first tangential abutment surface is positioned higher on the first major face than the first surface-wiping cutting edges, and that the second tangential abutment surface is positioned higher on the second major face than the second surface-wiping cutting edges.

According to another embodiment of the invention, the first section and the second section of said first longitudinal edge of said first clearance surface meet each other at a transition point on the first longitudinal edge, wherein the second section of the first longitudinal edge has a sloping first part that slopes toward the median plane from said transition point to an adjacent second part of the second section of the first longitudinal edge such that the second section of the first longitudinal edge is gradually approaching the median plane when moving along the sloping first part in a direction away from said transition point. Hereby, the above-mentioned bottom clearance is further improved.

According to another embodiment of the invention, the second section of said first longitudinal edge of said first clearance surface has a sloping third part that slopes toward the median plane from the second end of the first longitudinal edge such that the second section of the first longitudinal edge is gradually approaching the median plane when moving along the sloping third part in a direction away from the second end of the first longitudinal edge. Hereby, the above-mentioned bottom clearance is further improved.

According to another embodiment of the invention, each point of the second section of said first longitudinal edge of said first clearance surface is located closer to the median plane than said transition point. Hereby, the above-mentioned bottom clearance is further improved.

According to another embodiment of the invention, said first clearance surface is inclined in relation to the associated first side abutment surface at an angle that is substantially the same in every plane that is parallel to the second transverse plane and intersects the first clearance surface and the associated first side abutment surface. Said angle α is with advantage 1-6°, preferably 1-3°, and more preferably 2°.

According to another embodiment of the invention, said first clearance surface extends in a circular arc, as seen in any plane that is perpendicular to the centre axis of the cutting insert and extends across any part of the first clearance surface. This circular arc preferably has its centre of curvature located in a plane that is parallel to the second transverse plane and intersects said second longitudinal edge of the first clearance surface in said peak point on the second longitudinal edge. Said first clearance surface may as an alternative extend in an elliptical arc, as seen in any plane that is perpendicular to the centre axis of the cutting insert and extends across any part of the first clearance surface.

The cutting insert preferably has 180° rotational symmetry about the above-mentioned first imaginary reference axis and about the above-mentioned second imaginary reference axis. In this context, the cutting insert is considered to have 180° rotational symmetry about the first imaginary reference axis and about the second imaginary reference axis even if any of its faces is provided with one or more minor markings, for instance in the form of recesses, that lack 180° rotational symmetry about the first imaginary reference axis or about the second imaginary reference axis, on condition that these one or more markings have no relevance for the functioning of the cutting insert.

The first section of said first longitudinal edge of said first clearance surface suitably has a length that is 0.2D-0.8D, preferably 0.3D-0.6D, where D is the diameter of an inscribed circle of the cutting insert as seen in a plan view along the centre axis of the cutting insert. Said inscribed circle is inscribed in the median plane.

Preferably, the diameter D of the inscribed circle is 10-15 mm. Each of the corner cutting edges, when seen in a plan view along the centre axis of the cutting insert, is substantially radius shaped with a radius of curvature of 0,4 or 0,8 or 1,2 or 1,6 or 2,0 mm. Most preferably, said radius of curvature is 0,8 mm. This radius of curvature can have any value in the interval 0,4-2,0 mm, and can be even larger when the diameter of the inscribed circle is larger.

Further advantageous features of the double-sided cutting insert according to the present invention will appear from the description following below.

The invention also relates to a milling tool comprising at least one double-sided cutting insert of the above-mentioned type.

According to embodiments of the milling tool, the cutting insert is releasably fixed to an insert seat of the milling tool, wherein the insert seat is arranged at a negative axial tipping-in angle and a negative radial tipping-in angle. According to embodiments of the milling tool, the axial tipping-in angle is -4° to -20° and to an absolute value larger than the angle at which the first clearance surface is inclined in relation to the associated first side abutment surface. According to embodiments of the milling tool, the radial tipping-in angle is -4° to -20° and to an absolute value larger than the angle at which the first clearance surface is inclined in relation to the associated first side abutment surface.

Further advantageous features of the milling tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a double-sided cutting insert according to a first embodiment of the present invention,
- Fig 1c: is a plan view from above of the cutting insert of Figs 1a and 1b,
- Fig 1d: is a plan view from below of the cutting insert of Figs 1a and 1b,
- Fig 1e: is a part of the plan view of Fig 1c in larger scale,
- Fig 1f: is a lateral view of the cutting insert of Figs 1a and 1b seen along a first imaginary reference axis,
- Fig 1g: is a lateral view of the cutting insert of Figs 1a and 1b seen along a second imaginary reference axis,
- Fig 1h: is a cut according to the line Ih-Ih in Fig 1c,
- Fig 1i: is a cut according to the line Ii-Ii in Fig 1f,
- Fig 1j: is a cut according to the line Ij-Ij in Fig 1f,
- Fig 1k: is the cut of Fig 1i in smaller scale,
- Figs 2a and 2b: are perspective views from different directions of a double-sided cutting insert according to a second embodiment of the invention,
- Fig 2c: is a lateral view of the cutting insert of Figs 2a and 2b seen along a first imaginary reference axis,
- Fig 2d: is a lateral view of the cutting insert of Figs 2a and 2b seen along a second imaginary reference axis,
- Fig 2e: is a plan view from above of the cutting insert of Figs 2a and 2b,
- Fig 2f: is a cut according to the line IIf-IIf in Fig 2e,
- Fig 3: is a lateral view of a double-sided cutting insert according to a third embodiment of the invention,
- Fig 4a: is a perspective view of a milling tool provided with cutting inserts according to the embodiment illustrated in Figs 1a-1k, as seen with one of the cutting inserts removed from its insert seat in the tool body of the milling tool,
- Fig 4b: is a lateral view of the milling tool of Fig 4a, and
- Fig 4c: is a plan view of the milling tool of Fig 4a.

### DETAILED DESCRIPTION OF EMBODIMENTS OF THE INVENTION

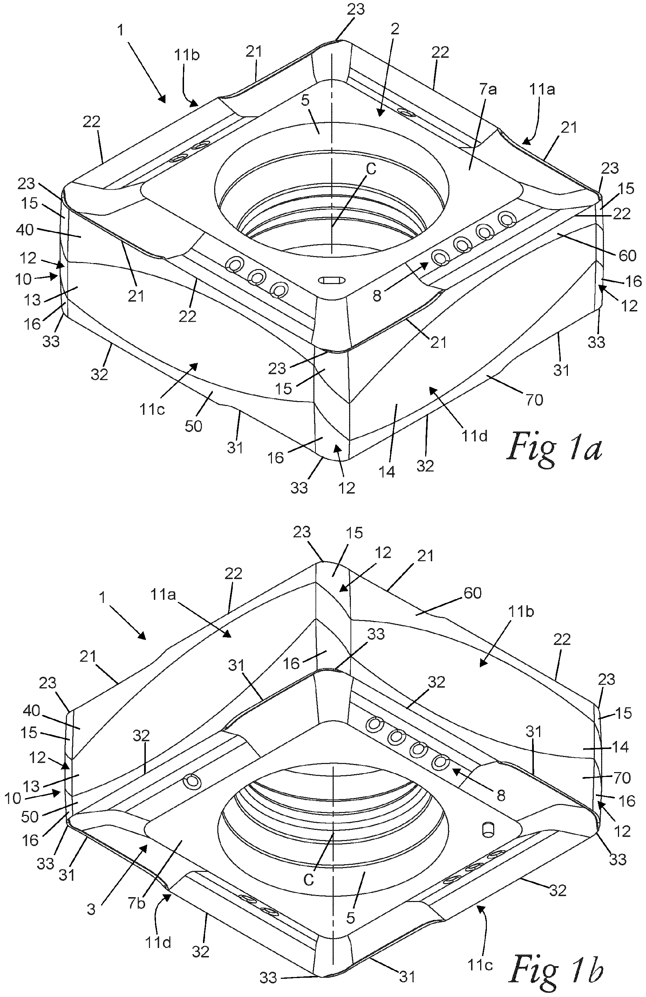

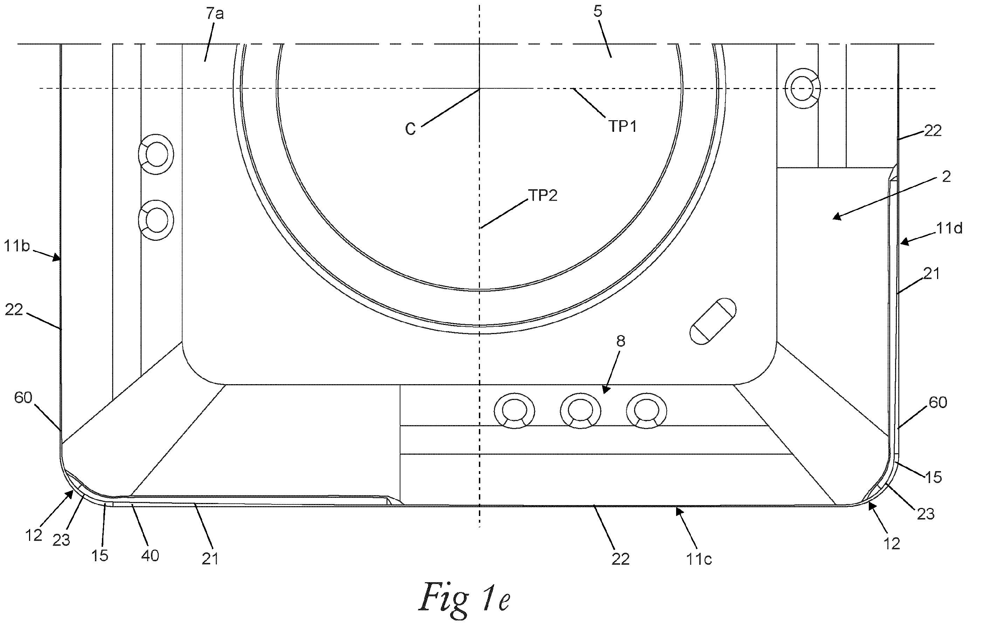

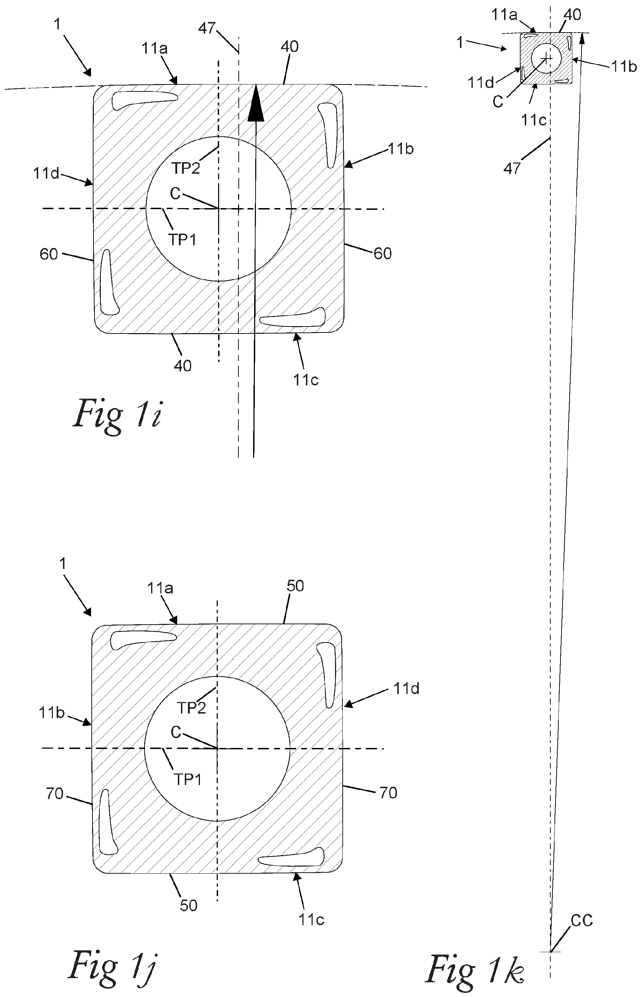

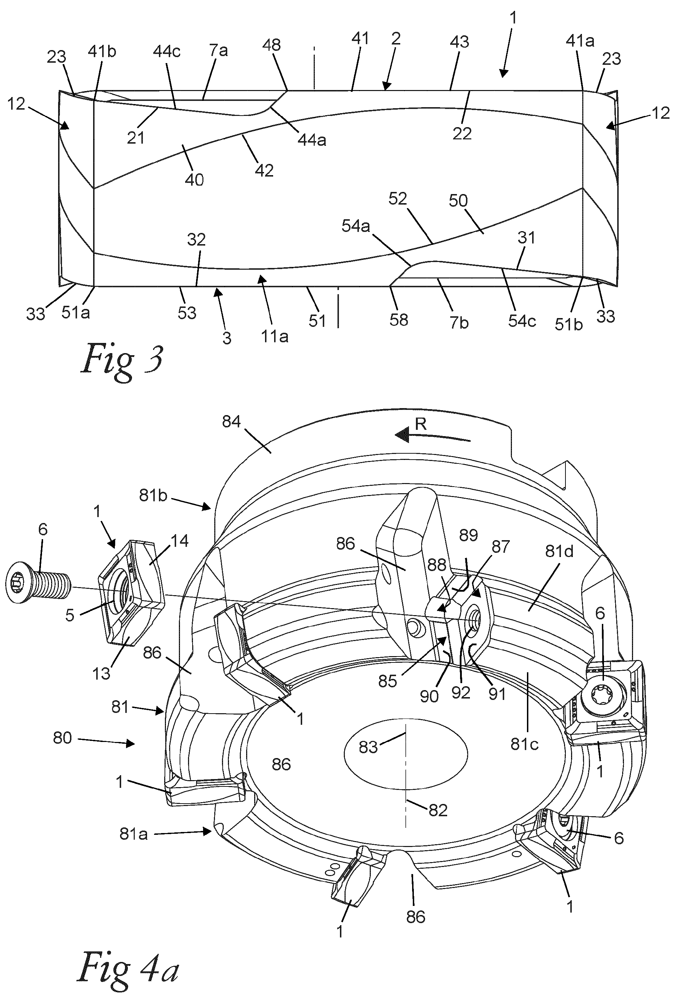

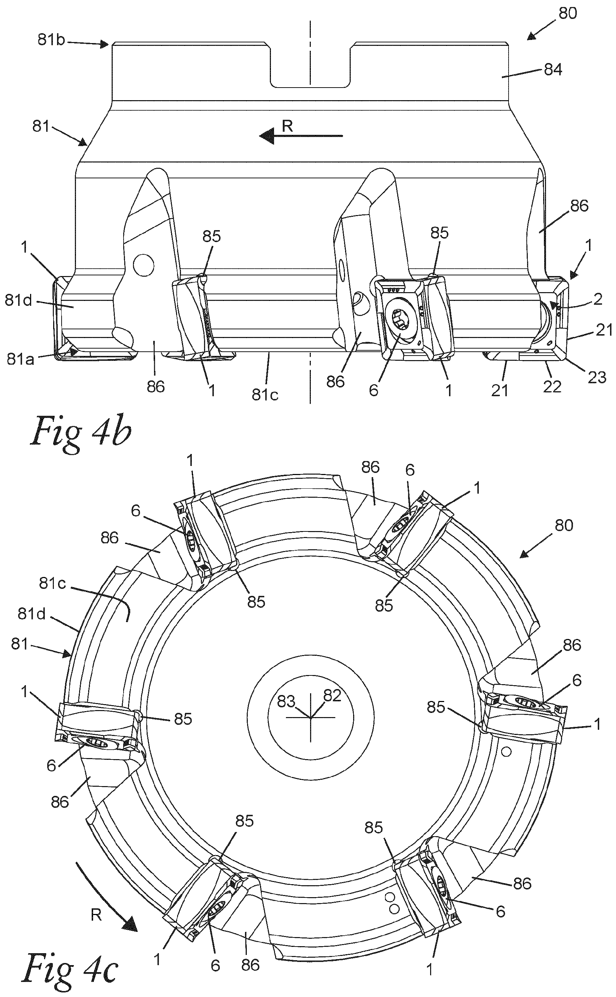

An embodiment of a double-sided cutting insert 1 according to the present invention is illustrated in Figs 1a-1k. The cutting insert 1 is configured for use in milling and is configured to be used in a milling tool, for instance a milling tool 80 of the type illustrated in Figs 4a-4c.

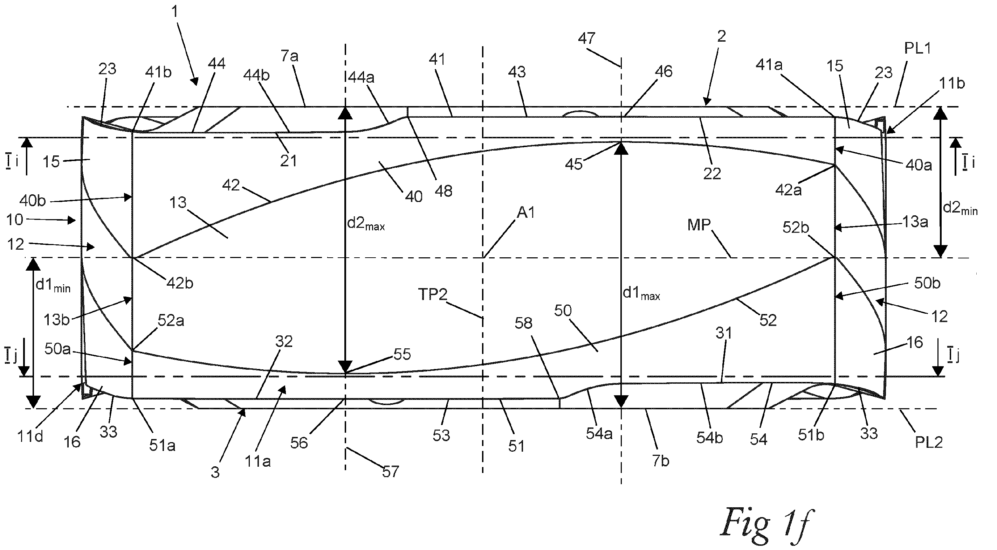

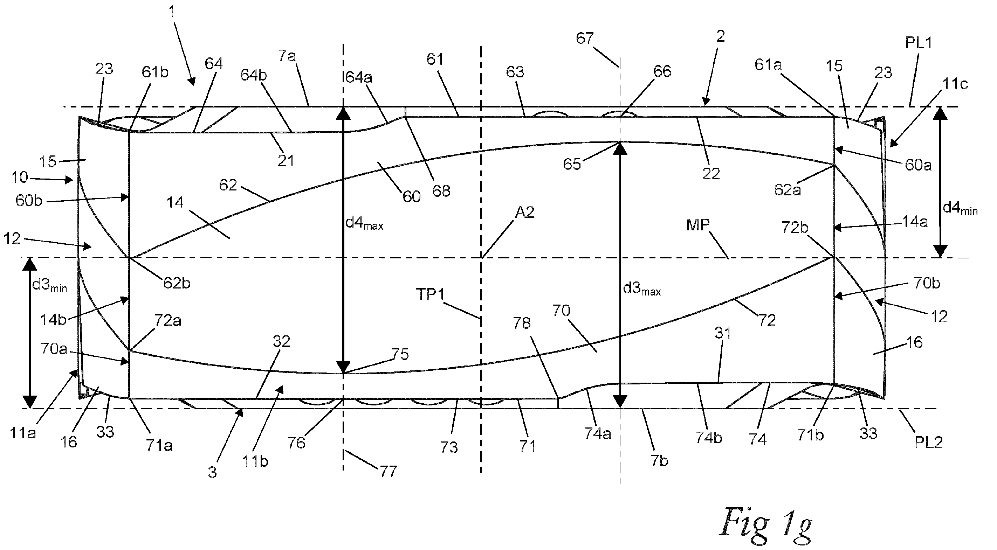

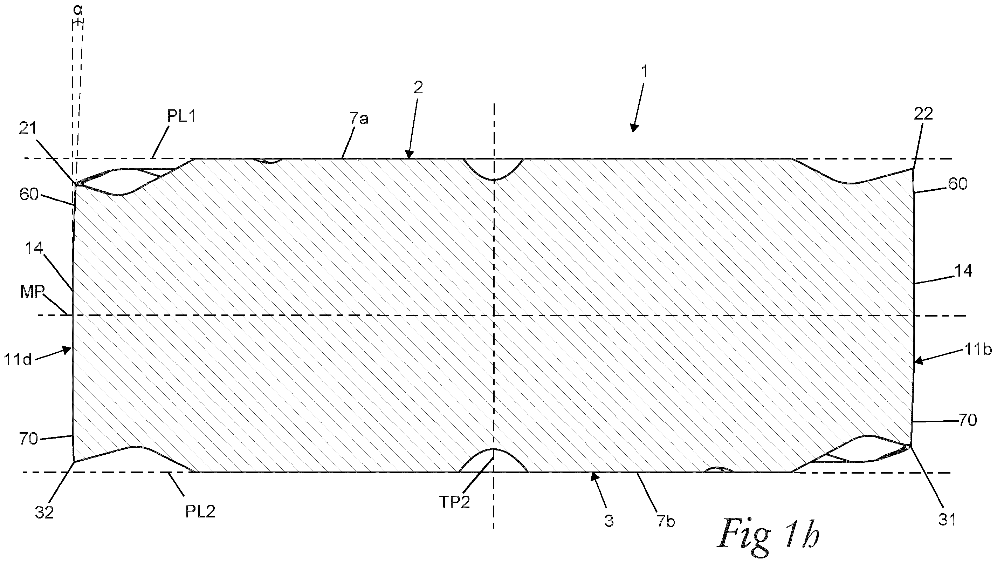

The cutting insert 1 has an essentially quadratic basic shape and is turnable into eight different working positions. The cutting insert 1 comprises a first major face 2 and a second major face 3 arranged on opposite sides of the cutting insert and serving as top and bottom faces of the cutting insert. The first and second major faces 2, 3 have an essentially quadratic shape, as seen in a plan view of the cutting insert 1. The cutting insert 1 has a centre axis C, which extends between the first and second major faces 2, 3. A median plane MP, which constitutes an imaginary plane, extends halfway between the first and second major faces 2, 3 perpendicularly to the centre axis C, as illustrated in Figs 1f, 1g and 1h. The first and second major faces 2, 3 are, within manufacturing tolerances, identical to each other. The cutting insert 1 has 90° rotational symmetry about the centre axis C.

In the illustrated embodiment, the cutting insert 1 is provided with a through hole 5, which extends centrally through the cutting insert between the first and second major faces 2, 3. The through hole 5 is configured to receive a fastening element 6 (see Figs 4a-4c), for instance in the form of a screw, by means of which the cutting insert may be releasably fixed to an insert seat 85 of a milling tool 80. The centre axis C of the cutting insert 1 coincides with the centre axis of the through hole 5. The cutting insert 1 may as an alternative lack a through hole 5, wherein the cutting insert is configured to be releasably fixed to an insert seat of a milling tool by means of suitable clamping means.

The first major face 2 comprises a first tangential abutment surface 7a that is configured to serve as a tangential abutment surface of the cutting insert 1 in four of the eight working positions of the cutting insert and abut against a corresponding tangential support surface 91 in an insert seat 85 in a tool body 81 of a milling tool 80 when the cutting insert 1 is mounted in the insert seat in any of these four working positions. The second major face 3 comprises a second tangential abutment surface 7b that is configured to serve as a tangential abutment surface of the cutting insert 1 in the other four working positions of the cutting insert and abut against a corresponding tangential support surface 91 in an insert seat 85 in a tool body 81 of a milling tool 80 when the cutting insert 1 is mounted in the insert seat in any of these four working positions. The first tangential abutment surface 7a is planar, or at least substantially planar, and extends in a first plane PL1 (see Figs 1f, 1g and 1h) that is perpendicular to the centre axis C and parallel to the median plane MP. The second tangential abutment surface 7b is also planar, or at least substantially planar, and extends in a second plane PL2 that is perpendicular to the centre axis C and parallel to the median plane MP. Thus, the first and second tangential abutment surfaces 7a, 7b, and thereby the first and second planes PL1, PL2, are parallel to each other.

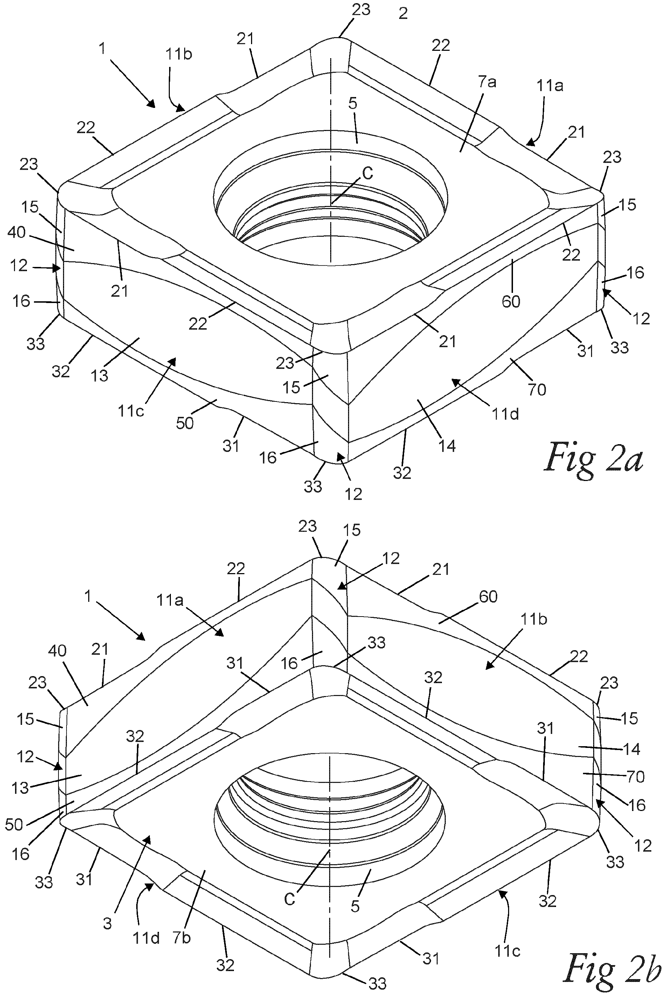

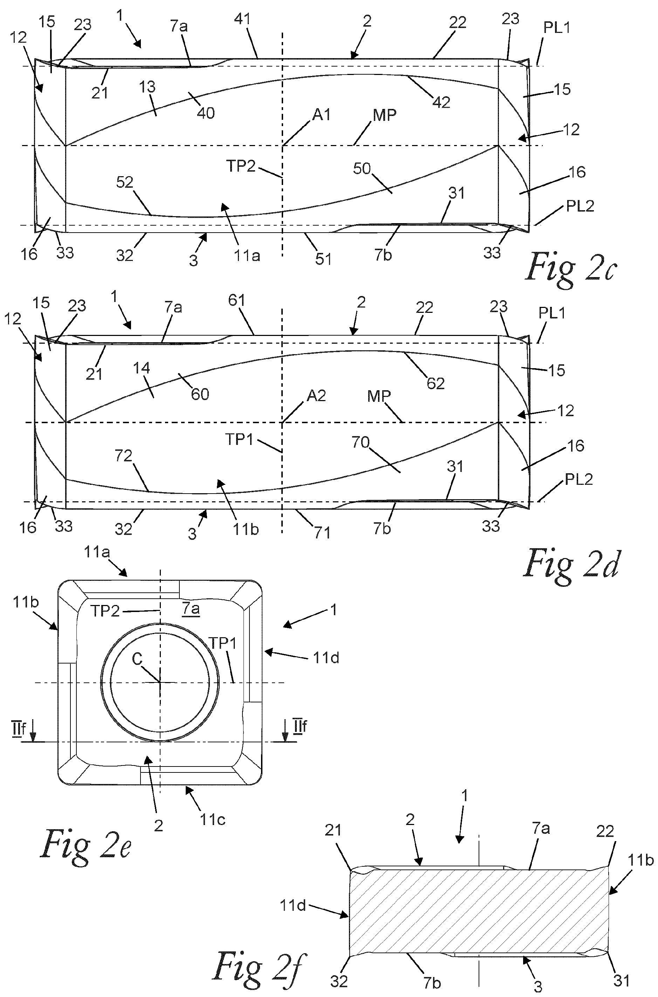

In the embodiment illustrated in Figs 1a-1k, each one of the first and second major faces 2, 3 is provided with markings 8 in the form of recesses in order to facilitate an identification of the different working positions of the cutting insert 1. In the embodiment illustrated in Figs 2a-2f, no such markings are provided on the first and second major faces 2, 3.

A peripheral surface 10 extends around the cutting insert 1 between the first and second major faces 2, 3. The peripheral surface 10 comprises four main side faces 11a-11d and four corner side faces 12, wherein each corner side face 12 is located between two adjacent main side faces 11a-11d. The main side faces comprises a first pair of main side faces 11a, 11c located opposite to each other on two opposite sides of the cutting insert 1 and a second pair of main side faces 11b, 11d located opposite to each other on two other opposite sides of the cutting insert. Thus, the two main side faces 11a, 11c in said first pair are located opposite to each other on mutually opposite sides of the centre axis C of the cutting insert 1. In the corresponding manner, the two main side faces 11b, 11d in said second pair are located opposite to each other on mutually opposite sides of the centre axis C of the cutting insert 1. The four main side faces 11a-11d are, within manufacturing tolerances, identical to each other.

A first transverse plane TP1, which constitutes an imaginary plane, extends halfway between the two main side faces 11a, 11c in said first pair and contains the centre axis C of the cutting insert 1. A second transverse plane TP2, which also constitutes an imaginary plane, extends halfway between the two main side faces 11b, 11d in said second pair and contains the centre axis C of the cutting insert 1. The first and second transverse planes TP1, TP2 extend perpendicularly to each other and intersect each other along the centre axis C of the cutting insert 1. Each main side face 11a, 11c in said first pair has 180° rotational symmetry about a first imaginary reference axis A1 (see Fig 1f) that extends along a line of intersection between the median plane MP and the second transverse plane TP2 and each main side face 11b, 11d in said second pair has 180° rotational symmetry about a second imaginary reference axis A2 (see Fig 1g) that extends along a line of intersection between the median plane MP and the first transverse plane TP1.

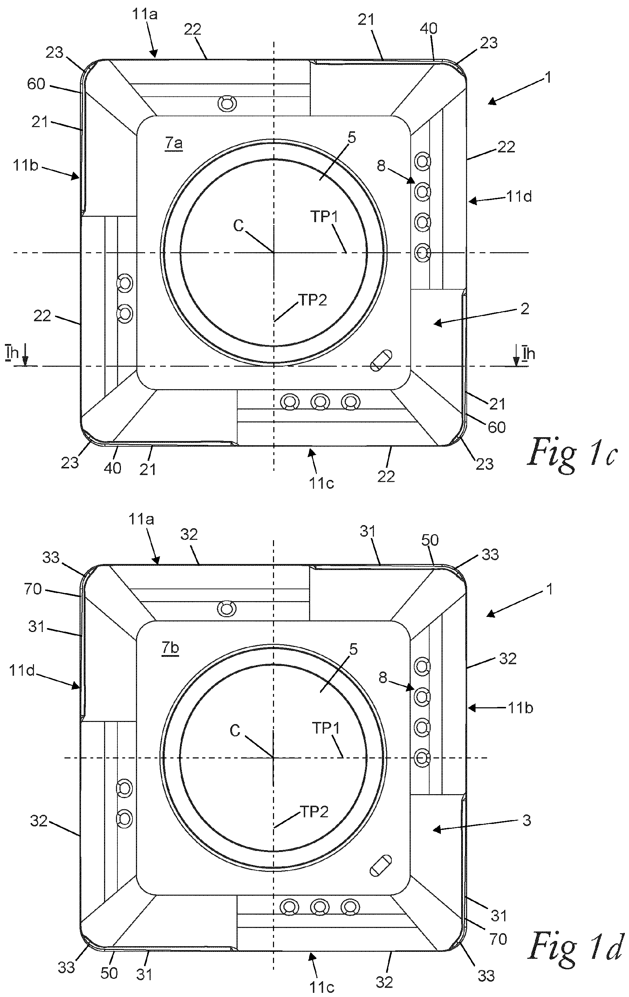

The cutting insert 1 comprises the following cutting edges:
- four first main cutting edges 21 formed at an intersection between a respective one of the four main side faces 11a-11d and the first major face 2;
- four second main cutting edges 31 formed at an intersection between a respective one of the four main side faces 11a-11d and the second major face 3;
- four first surface-wiping cutting edges 22 formed at an intersection between a respective one of the four main side faces 11a-11d and the first major face 2;
- four second surface-wiping cutting edges 32 formed at an intersection between a respective one of the four main side faces 11a-11d and the second major face 3;
- four first curved corner cutting edges 23 formed at an intersection between a respective one of the four corner side faces 12 and the first major face 2, wherein each one the first curved corner cutting edges 23 is located between one of the first main cutting edges 21 and one of the first surface-wiping cutting edges 22 with the first curved corner cutting edge 23 located ahead of the adjacent first main cutting edge 21 and behind the adjacent first surface-wiping cutting edge 22, as seen in a clockwise direction about the centre axis C when viewing the first major face 2 in a plan view along the centre axis C (as illustrated in Fig 1c); and
- four second curved corner cutting edges 33 formed at an intersection between a respective one of the four corner side faces 12 and the second major face 3, wherein each one the second curved corner cutting edges 33 is located between one of the second main cutting edges 31 and one of the second surface-wiping cutting edges 32 with the second curved corner cutting edge 33 located ahead of the adjacent second main cutting edge 31 and behind the adjacent second surface-wiping cutting edge 32, as seen in a clockwise direction about the centre axis C when viewing the second major face 3 in a plan view along the centre axis C (as illustrated in Fig 1d).

The cutting edges 21, 22, 23 located along the periphery of the first major face 2 form four different first sets of cutting edges, each such first set of cutting edges comprising one first main cutting edge 21, one first curved corner cutting edge 23 located adjacent to the first main cutting edge and one first surface-wiping cutting edge 22 located adjacent to the first curved corner cutting edge 23. The cutting edges 31, 32, 33 located along the periphery of the second major face 3 form four different second sets of cutting edges, each such second set of cutting edges comprising one second main cutting edge 31, one second curved corner cutting edge 33 located adjacent to the second main cutting edge and one second surface-wiping cutting edge 32 located adjacent to the second curved corner cutting edge 33. Thus, the cutting insert 1 is in total provided with eight different sets of cutting edges, each of which comprising a main cutting edge 21, 31 and a surface-wiping cutting edge 22, 32 with an intermediate curved corner cutting edge 23, 33. In each one of the different working positions of the cutting insert 1, the cutting edges of one of the eight different sets of cutting edges constitute the active cutting edges of the cutting insert.

Each main side face 11a, 11c in said first pair comprises a substantially planar first side abutment surface 13 that is parallel to the first transverse plane TP1 and extends from one of the four corner side faces 12 to another one of the four corner side faces 12, wherein this first side abutment surface 13 has a first end 13a (see Fig 1f), through which it adjoins to the former corner side face 12, and an opposite second end 13b, through which it adjoins to the latter corner side face 12. Thus, the cutting insert 1 has two such first side abutment surfaces 13, which are parallel to each other and located on opposite sides of the centre axis C. In the corresponding manner, each main side face 11b, 11d in said second pair comprises a substantially planar second side abutment surface 14 that is parallel to the second transverse plane TP2 and extends from one of the four corner side faces 12 to another one of the four corner side faces 12, wherein this second side abutment surface 14 has a first end 14a (see Fig 1g), through which it adjoins to the former corner side face 12, and an opposite second end 14b, through which it adjoins to the latter corner side face 12. Thus, the cutting insert 1 has two such second side abutment surfaces 14, which are parallel to each other and located on opposite sides of the centre axis C. As a consequence of the above-mentioned 90° rotational symmetry of the cutting insert 1 about its centre axis C, the second side abutment surfaces 14 have the same shape as the first side abutment surfaces 13.

Each main side face 11a, 11c in said first pair comprises an inclined first clearance surface 40 that extends between the first side abutment surface 13 on the same main side face 11a, 11c and the first major face 2 all along this first side abutment surface 13. This first clearance surface 40 has a first end 40a (see Fig 1f) at the first end 13a of the associated first side abutment surface 13, and an opposite second end 40b at the second end 13b of the associated first side abutment surface 13. Furthermore, the first clearance surface 40 has a first longitudinal edge 41, through which it adjoins to the first major face 2, and an opposite second longitudinal edge 42, through which it adjoins to the associated first side abutment surface 13, wherein these first and second longitudinal edges 41, 42 have a respective first end 41a, 42a at the first end 40a of the first clearance surface and a respective second end 41b, 42b at the second end 40b of the first clearance surface. Said first longitudinal edge 41 has a first section 43 that extends from the first end 41a of the first longitudinal edge 41 in a direction toward the second end 41b thereof and that consists of one of said four first surface-wiping cutting edges 22, and an adjacent second section 44 that extends from the second end 41b of the first longitudinal edge 41 in a direction toward the first end 41a thereof and that consists of one of said four first main cutting edges 21. The first clearance surface 40 is inclined outwards from the first major face 2, such that its first longitudinal edge 41 is located closer to the first transverse plane TP1 than its second longitudinal edge 42, as seen in any plane that is parallel to the second transverse plane TP2 and extends across the first clearance surface 40.

The first clearance surface 40 is convexly curved, as seen in any plane that is perpendicular to the centre axis C of the cutting insert 1 and extends across any part of the first clearance surface 40, which implies that the entire line of intersection between any such plane and the first clearance surface 40 is convexly curved. This convex curvature of the first clearance surface 40 also implies that its first longitudinal edge 41, and thereby also the associated first surface-wiping cutting edge 22, is convexly curved as seen in a plan view of the cutting insert 1 along the centre axis C. The first clearance surface 40 has such shape that a perpendicular distance d1 between its second longitudinal edge 42 and the above-mentioned second plane PL2 has a minimum d1ₘᵢₙ (see Fig 1f) at the second end 42b of the second longitudinal edge and a maximum d1ₘₐₓ at a peak point 45 on the second longitudinal edge located in a plane 47 that is parallel to the second transverse plane TP2 and intersects the first longitudinal edge 41 in a point 46 within the middle third of the longitudinal extension of said first section 43 of the first longitudinal edge 41, wherein said perpendicular distance d1 is larger at the first end 42a than at the second end 42b of the second longitudinal edge 42. Furthermore, the first clearance surface 40 has such shape that its second longitudinal edge 42 is gradually approaching said second plane PL2 when moving along the second longitudinal edge 42 from said peak point 45 on the second longitudinal edge 42 to the first end 42a thereof, and when moving along the second longitudinal edge 42 from said peak point 45 on the second longitudinal edge 42 to the second end 42b thereof. Thus, said perpendicular distance d1 is gradually reduced when moving along the second longitudinal edge 42 from the peak point 45 to the first end 42a thereof, and when moving along the second longitudinal edge 42 from the peak point 45 to the second end 42b thereof. In the illustrated embodiments, the above-mentioned point 46 on the first longitudinal edge 41 is a midpoint of the first section 43 of the first longitudinal edge 41.

The first clearance surface 40 has a maximum width at its second end 40b. In the embodiments illustrated in Figs 1a-1k and 2a-2f, the first clearance surface 40 has a minimum width at the above-mentioned peak point 45 on the second longitudinal edge 42.

Each main side face 11a, 11c in said first pair also comprises an inclined second clearance surface 50 that extends between the first side abutment surface 13 on the same main side face 11a, 11c and the second major face 3 all along this first side abutment surface 13. This second clearance surface 50 has a first end 50a (see Fig 1f) at the second end 13b of the associated first side abutment surface 13, and an opposite second end 50b at the first end 13a of the associated first side abutment surface 13. Furthermore, the second clearance surface 50 has a first longitudinal edge 51, through which it adjoins to the second major face 3, and an opposite second longitudinal edge 52, through which it adjoins to the associated first side abutment surface 13, wherein these first and second longitudinal edges 51, 52 have a respective first end 51a, 52a at the first end 50a of the second clearance surface and a respective second end 51b, 52b at the second end 50b of the second clearance surface. Said first longitudinal edge 51 has a first section 53 that extends from the first end 51a of the first longitudinal edge 51 in a direction toward the second end 51b thereof and that consists of one of said four second surface-wiping cutting edges 32, and an adjacent second section 54 that extends from the second end 51b of the first longitudinal edge 51 in a direction toward the first end 51a thereof and that consists of one of said four second main cutting edges 31. The second clearance surface 50 is inclined outwards from the second major face 3, such that its first longitudinal edge 51 is located closer to the first transverse plane TP1 than its second longitudinal edge 52, as seen in any plane that is parallel to the second transverse plane TP2 and extends across the second clearance surface 50.

The second clearance surface 50 is convexly curved, as seen in any plane that is perpendicular to the centre axis C of the cutting insert 1 and extends across any part of the second clearance surface 50, which implies that the entire line of intersection between any such plane and the second clearance surface 50 is convexly curved. This convex curvature of the second clearance surface 50 also implies that its first longitudinal edge 51, and thereby also the associated second surface-wiping cutting edge 32, is convexly curved as seen in a plan view of the cutting insert 1 along the centre axis C. The second clearance surface 50 has such shape that a perpendicular distance d2 between its second longitudinal edge 52 and the above-mentioned first plane PL1 has a minimum d2ₘᵢₙ (see Fig 1f) at the second end 52b of the second longitudinal edge and a maximum d2ₘₐₓ at a peak point 55 on the second longitudinal edge located in a plane 57 that is parallel to the second transverse plane TP2 and intersects the first longitudinal edge 51 in a point 56 within the middle third of the longitudinal extension of said first section 53 of the first longitudinal edge 51, wherein said perpendicular distance d2 is larger at the first end 52a than at the second end 52b of the second longitudinal edge 52. Furthermore, the second clearance surface 50 has such shape that its second longitudinal edge 52 is gradually approaching said first plane PL1 when moving along the second longitudinal edge 52 from said peak point 55 on the second longitudinal edge 52 to the first end 52a thereof, and when moving along the second longitudinal edge 52 from said peak point 55 on the second longitudinal edge 52 to the second end 52b thereof. Thus, said perpendicular distance d2 is gradually reduced when moving along the second longitudinal edge 52 from the peak point 55 to the first end 52a thereof, and when moving along the second longitudinal edge 52 from the peak point 55 to the second end 52b thereof. In the illustrated embodiments, the above-mentioned point 56 on the first longitudinal edge 51 is a midpoint of the first section 53 of the first longitudinal edge 51.

The second clearance surface 50 has a maximum width at its second end 50b. In the embodiments illustrated in Figs 1a-1k and 2a-2f, the second clearance surface 50 has a minimum width at the above-mentioned peak point 55 on the second longitudinal edge 52.

Each main side face 11b, 11d in said second pair comprises an inclined third clearance surface 60 that extends between the second side abutment surface 14 on the same main side face 11b, 11d and the first major face 2 all along this second side abutment surface 14. This third clearance surface 60 has a first end 60a (see Fig 1g) at the first end 14a of the associated second side abutment surface 14, and an opposite second end 60b at the second end 14b of the associated second side abutment surface 14. Furthermore, the third clearance surface 60 has a first longitudinal edge 61, through which it adjoins to the first major face 2, and an opposite second longitudinal edge 62, through which it adjoins to the associated second side abutment surface 14, wherein these first and second longitudinal edges 61, 62 have a respective first end 61a, 62a at the first end 60a of the third clearance surface and a respective second end 61b, 62b at the second end 60b of the third clearance surface. Said first longitudinal edge 61 has a first section 63 that extends from the first end 61a of the first longitudinal edge 61 in a direction toward the second end 61b thereof and that consists of one of said four first surface-wiping cutting edges 22, and an adjacent second section 64 that extends from the second end 61b of the first longitudinal edge 61 in a direction toward the first end 61a thereof and that consists of one of said four first main cutting edges 21. The third clearance surface 60 is inclined outwards from the first major face 2, such that its first longitudinal edge 61 is located closer to the second transverse plane TP2 than its second longitudinal edge 62, as seen in any plane that is parallel to the first transverse plane TP1 and extends across the third clearance surface 60.

The third clearance surface 60 is convexly curved, as seen in any plane that is perpendicular to the centre axis C of the cutting insert 1 and extends across any part of the third clearance surface 60, which implies that the entire line of intersection between any such plane and the third clearance surface 60 is convexly curved. This convex curvature of the third clearance surface 60 also implies that its first longitudinal edge 61, and thereby also the associated first surface-wiping cutting edge 22, is convexly curved as seen in a plan view of the cutting insert 1 along the centre axis C. The third clearance surface 60 has such shape that a perpendicular distance d3 between its second longitudinal edge 62 and the above-mentioned second plane PL2 has a minimum d3ₘᵢₙ (see Fig 1g) at the second end 62b of the second longitudinal edge and a maximum d3ₘₐₓ at a peak point 65 on the second longitudinal edge located in a plane 67 that is parallel to the first transverse plane TP1 and intersects the first longitudinal edge 61 in a point 66 within the middle third of the longitudinal extension of said first section 63 of the first longitudinal edge 61, wherein said perpendicular distance d3 is larger at the first end 62a than at the second end 62b of the second longitudinal edge 62. Furthermore, the third clearance surface 60 has such shape that its second longitudinal edge 62 is gradually approaching said second plane PL2 when moving along the second longitudinal edge 62 from said peak point 65 on the second longitudinal edge 62 to the first end 62a thereof, and when moving along the second longitudinal edge 62 from said peak point 65 on the second longitudinal edge 62 to the second end 62b thereof. Thus, said perpendicular distance d3 is gradually reduced when moving along the second longitudinal edge 62 from the peak point 65 to the first end 62a thereof, and when moving along the second longitudinal edge 62 from the peak point 65 to the second end 62b thereof. In the illustrated embodiments, the above-mentioned point 66 on the first longitudinal edge 61 is a midpoint of the first section 63 of the first longitudinal edge 61.

The third clearance surface 60 has a maximum width at its second end 60b. In the embodiments illustrated in Figs 1a-1k and 2a-2f, the third clearance surface 60 has a minimum width at the above-mentioned peak point 65 on the second longitudinal edge 62.

Each main side face 11b, 11d in said second pair also comprises an inclined fourth clearance surface 70 that extends between the second side abutment surface 14 on the same main side face 11a, 11c and the second major face 3 all along this second side abutment surface 14. This fourth clearance surface 70 has a first end 70a (see Fig 1g) at the second end 14b of the associated second side abutment surface 14, and an opposite second end 70b at the first end 14a of the associated second side abutment surface 14. Furthermore, the fourth clearance surface 70 has a first longitudinal edge 71, through which it adjoins to the second major face 3, and an opposite second longitudinal edge 72, through which it adjoins to the associated second side abutment surface 14, wherein these first and second longitudinal edges 71, 72 have a respective first end 71a, 72a at the first end 70a of the fourth clearance surface and a respective second end 71b, 72b at the second end 70b of the fourth clearance surface. Said first longitudinal edge 71 has a first section 73 that extends from the first end 71a of the first longitudinal edge 71 in a direction toward the second end 71b thereof and that consists of one of said four second surface-wiping cutting edges 32, and an adjacent second section 74 that extends from the second end 71b of the first longitudinal edge 71 in a direction toward the first end 71a thereof and that consists of one of said four second main cutting edges 31. The fourth clearance surface 70 is inclined outwards from the second major face 3, such that its first longitudinal edge 71 is located closer to the second transverse plane TP2 than its second longitudinal edge 72, as seen in any plane that is parallel to the first transverse plane TP1 and extends across the fourth clearance surface 70.

The fourth clearance surface 70 is convexly curved, as seen in any plane that is perpendicular to the centre axis C of the cutting insert 1 and extends across any part of the fourth clearance surface 70, which implies that the entire line of intersection between any such plane and the fourth clearance surface 70 is convexly curved. This convex curvature of the fourth clearance surface 70 also implies that its first longitudinal edge 71, and thereby also the associated second surface-wiping cutting edge 32, is convexly curved as seen in a plan view of the cutting insert 1 along the centre axis C. The fourth clearance surface 70 has such shape that a perpendicular distance d4 between its second longitudinal edge 72 and the above-mentioned first plane PL1 has a minimum d4ₘᵢₙ (see Fig 1g) at the second end 72b of the second longitudinal edge and a maximum d4ₘₐₓ at a peak point 75 on the second longitudinal edge located in a plane 77 that is parallel to the first transverse plane TP1 and intersects the first longitudinal edge 71 in a point 76 within the middle third of the longitudinal extension of said first section 73 of the first longitudinal edge 71, wherein said perpendicular distance d4 is larger at the first end 72a than at the second end 72b of the second longitudinal edge 72. Furthermore, the fourth clearance surface 70 has such shape that its second longitudinal edge 72 is gradually approaching said first plane PL1 when moving along the second longitudinal edge 72 from said peak point 75 on the second longitudinal edge 72 to the first end 72a thereof, and when moving along the second longitudinal edge 72 from said peak point 75 on the second longitudinal edge 72 to the second end 72b thereof. Thus, said perpendicular distance d4 is gradually reduced when moving along the second longitudinal edge 72 from the peak point 75 to the first end 72a thereof, and when moving along the second longitudinal edge 72 from the peak point 75 to the second end 72b thereof. In the illustrated embodiments, the above-mentioned point 76 on the first longitudinal edge 71 is a midpoint of the first section 73 of the first longitudinal edge 71.

The fourth clearance surface 70 has a maximum width at its second end 70b. In the embodiments illustrated in Figs 1a-1k and 2a-2f, the fourth clearance surface 70 has a minimum width at the above-mentioned peak point 75 on the second longitudinal edge 72.

In the illustrated embodiments, the first clearance surface 40 is inclined in relation to the associated first side abutment surface 13 at an angle α that is substantially the same in every plane that is parallel to the second transverse plane TP2 and intersects the first clearance surface 40 and the associated first side abutment surface 13. In this case, and as a consequence of the above-mentioned symmetries of the cutting insert 1, the second clearance surface 50 is inclined in relation to the associated first side abutment surface 13 at said angle α in every plane that is parallel to the second transverse plane TP2 and intersects the second clearance surface 50 and the associated first side abutment surface 13, the third clearance surface 60 is inclined in relation to the associated second side abutment surface 14 at said angle α (see Fig 1h) in every plane that is parallel to the first transverse plane TP1 and intersects the third clearance surface 60 and the associated second side abutment surface 14, and the fourth clearance surface 70 is inclined in relation to the associated second side abutment surface 14 at said angle α in every plane that is parallel to the first transverse plane TP1 and intersects the fourth clearance surface 70 and the associated second side abutment surface 14. The angle α is with advantage 1-6°, preferably 1-3°, and more preferably 2°.

In the illustrated embodiments, the first clearance surface 40 extends in a circular arc as seen in any plane that is perpendicular to the centre axis C of the cutting insert 1 and extends across any part of the first clearance surface 40, wherein this circular arc has its centre of curvature CC (see Fig 1k) located in the above-mentioned plane 47 that is parallel to the second transverse plane TP2 and intersects the second longitudinal edge 42 of the first clearance surface 40 in the peak point 45 on the second longitudinal edge 42. In this case, and as a consequence of the above-mentioned symmetries of the cutting insert 1:
- the second clearance surface 50 extends in a circular arc as seen in any plane that is perpendicular to the centre axis C and extends across any part of the second clearance surface 50, wherein this circular arc has its centre of curvature located in the above-mentioned plane 57 that is parallel to the second transverse plane TP2 and intersects the second longitudinal edge 52 of the second clearance surface 50 in the peak point 55 on the second longitudinal edge 52;
- the third clearance surface 60 extends in a circular arc as seen in any plane that is perpendicular to the centre axis C and extends across any part of the third clearance surface 60, wherein this circular arc has its centre of curvature located in the above-mentioned plane 67 that is parallel to the first transverse plane TP1 and intersects the second longitudinal edge 62 of the third clearance surface 60 in the peak point 65 on the second longitudinal edge 62; and
- the fourth clearance surface 70 extends in a circular arc as seen in any plane that is perpendicular to the centre axis C and extends across any part of the fourth clearance surface 70, wherein this circular arc has its centre of curvature located in the above-mentioned plane 77 that is parallel to the first transverse plane TP1 and intersects the second longitudinal edge 72 of the fourth clearance surface 70 in the peak point 75 on the second longitudinal edge 72.

As an alternative, each one of the clearance surfaces 40, 50, 60, 70 may extend in an elliptical arc, as seen in any plane that is perpendicular to the centre axis C of the cutting insert and extends across any part of the clearance surface in question.

In the illustrated embodiments, the first and third clearance surfaces 40, 60 located along the periphery of the first major face 2 are connected to each other through corresponding inclined clearance surfaces 15 on the intermediate corner side faces 12, such that the first and third clearance surfaces 40, 60 on the main side faces 11a-11d and the associated intermediate clearance surfaces 15 on the corner side faces 12 together extend in a continuous path all along the periphery of the first major face 2. In this case, the second and fourth clearance surfaces 50, 70 located along the periphery of the second major face 3 are connected to each other through corresponding inclined clearance surfaces 16 on the intermediate corner side faces 12, such that the second and fourth clearance surfaces 50, 70 on the main side faces 11a-11d and the associated intermediate clearance surfaces 16 on the corner side faces 12 together extend in a continuous path all along the periphery of the second major face 3.

The above-mentioned clearance surfaces 15, 16, 40, 50, 60, 70 are preferably formed by grinding.

In the illustrated embodiments, the first section 43, 53 of the first longitudinal edge 41, 51 of each one of the first and second clearance surfaces 40, 50 is parallel to the median plane MP, as seen in a lateral view of the cutting insert 1 along the first imaginary reference axis A1 toward the associated main side face 11a, 11c, wherein the first section 63, 73 of the first longitudinal edge 61, 71 of each one of the third and fourth clearance surfaces 60, 70 is parallel to the median plane MP, as seen in a lateral view of the cutting insert 1 along the second imaginary reference axis A2 toward the associated main side face 11b, 11d.

In the embodiment illustrated in Figs 1a-1k, the first section 43, 63 of the first longitudinal edge 41, 61 of each one of the first and third clearance surfaces 40, 60 is located closer to the median plane MP than said first plane PL1, wherein the first section 53, 73 of the first longitudinal edge 51, 71 of each one of the second and fourth clearance surfaces 50, 70 is located closer to the median plane MP than said second plane PL2. Thus, in this case, the first and second tangential abutment surfaces 7a, 7b are arranged in an elevated position on the respective major face 2, 3 in relation to the surface-wiping cutting edges 22, 32 provided along the same major face 2, 3, wherein each one of the first surface-wiping cutting edges 22 is located closer to the median plane MP than the first tangential abutment surface 7a on the first major face 2, and each one of the second surface-wiping cutting edges 32 is located closer to the median plane MP than the second tangential abutment surface 7b on the second major face 3.

In the embodiment illustrated in Figs 2a-2f, the first section 43, 63 of the first longitudinal edge 41, 61 of each one of the first and third clearance surfaces 40, 60 is located further from the median plane MP than said first plane PL1, wherein the first section 53, 73 of the first longitudinal edge 51, 71 of each one of the second and fourth clearance surfaces 50, 70 is located further from the median plane MP than said second plane PL2. Thus, in this case, the first and second tangential abutment surfaces 7a, 7b are arranged in a depressed position on the respective major face 2, 3 in relation to the surface-wiping cutting edges 22, 32 provided along the same major face 2, 3, wherein each one of the first surface-wiping cutting edges 22 is located further from the median plane MP than the first tangential abutment surface 7a on the first major face 2, and each one of the second surface-wiping cutting edges 32 is located further from the median plane MP than the second tangential abutment surface 7b on the second major face 3. Except for the depressed arrangement of the first and second tangential abutment surfaces 7a, 7b on the first and second major faces 2, 3 and the lack of markings 8 on the first and second major faces 2, 3, the cutting insert 1 illustrated in Figs 2a-2f has the same design as the cutting insert 1 illustrated in Figs 1a-1k.

The first section 43 and the second section 44 of the first longitudinal edge 41 of the first clearance surface 40 meet each other at a transition point 48 on the first longitudinal edge 41, wherein the first section 53 and the second section 54 of the first longitudinal edge 51 of the second clearance surface 50 meet each other at a transition point 58 on the first longitudinal edge 51, the first section 63 and the second section 64 of the first longitudinal edge 61 of the third clearance surface 60 meet each other at a transition point 68 on the first longitudinal edge 61, and the first section 73 and the second section 74 of the first longitudinal edge 71 of the fourth clearance surface 70 meet each other at a transition point 78 on the first longitudinal edge 71.

In the illustrated embodiments, the second section 44 of the first longitudinal edge 41 of the first clearance surface 40 has a sloping first part 44a that slopes toward the median plane MP from said transition point 48 on the first longitudinal edge 41 to an adjacent second part 44b of the second section 44 of the first longitudinal edge 41 such that the second section 44 of the first longitudinal edge 41 is gradually approaching the median plane MP when moving along the sloping first part 44a in a direction away from said transition point 48. In this case, and as a consequence of the above-mentioned symmetries of the cutting insert 1:
- the second section 54 of the first longitudinal edge 51 of the second clearance surface 50 has a sloping first part 54a that slopes toward the median plane MP from said transition point 58 on the first longitudinal edge 51 to an adjacent second part 54b of the second section 54 of the first longitudinal edge 51 such that the second section 54 of the first longitudinal edge 51 is gradually approaching the median plane MP when moving along the sloping first part 54a in a direction away from said transition point 58;
- the second section 64 of the first longitudinal edge 61 of the third clearance surface 60 has a sloping first part 64a that slopes toward the median plane MP from said transition point 68 on the first longitudinal edge 61 to an adjacent second part 64b of the second section 64 of the first longitudinal edge 61 such that the second section 64 of the first longitudinal edge 61 is gradually approaching the median plane MP when moving along the sloping first part 64a in a direction away from said transition point 68; and
- the second section 74 of the first longitudinal edge 71 of the forth clearance surface 70 has a sloping first part 74a that slopes toward the median plane MP from said transition point 78 on the first longitudinal edge 71 to an adjacent second part 74b of the second section 74 of the first longitudinal edge 71 such that the second section 74 of the first longitudinal edge 71 is gradually approaching the median plane MP when moving along the sloping first part 74a in a direction away from said transition point 78.

As illustrated in Fig 3, the second section 44, 54, 64, 74 of the first longitudinal edge 41, 51, 61, 71 of each one of the first, second, third and fourth clearance surfaces 40, 50, 60, 70 may also have a sloping third part 44c, 54c that slopes toward the median plane MP from the second end 41b, 51b, 61b, 71b of the first longitudinal edge such that the second section 44, 54, 64, 74 of the first longitudinal edge 41, 51, 61, 71 is gradually approaching the median plane MP when moving along the sloping third part 44c, 54c in a direction away from the second end 41b, 51b, 61b, 71b of the first longitudinal edge. Except for said sloping third part of the second section 44, 54, 64, 74 of the first longitudinal edge 41, 51, 61, 71 of each clearance surface 40, 50, 60, 70, the cutting insert 1 illustrated in Fig 3 has the same design as the cutting insert 1 illustrated in Figs 2a-2f.

In the illustrated embodiments, each point of the second section 44 of the first longitudinal edge 41 of the first clearance surface 40 is located closer to the median plane MP than said transition point 48 on the first longitudinal edge 41. In this case, and as a consequence of the above-mentioned symmetries of the cutting insert 1:
- each point of the second section 54 of the first longitudinal edge 51 of the second clearance surface 50 is located closer to the median plane MP than said transition point 58 on the first longitudinal edge 51;
- each point of the second section 64 of the first longitudinal edge 61 of the third clearance surface 60 is located closer to the median plane MP than said transition point 68 on the first longitudinal edge 61; and
- each point of the second section 74 of the first longitudinal edge 71 of the fourth clearance surface 70 is located closer to the median plane MP than said transition point 78 on the first longitudinal edge 71.

In the illustrated embodiments, the cutting insert 1 has 180° rotational symmetry about the above-mentioned first imaginary reference axis A1 and also about the above-mentioned second imaginary reference axis A2.

Figs 4a-4c illustrate a milling tool 80 in the form of an end mill tool, which for instance may be used for square-shoulder milling or face milling. The milling tool 80 comprises a tool body 81 and is configured to be rotated about an axis of rotation 82. The tool body 81 has a front end 81a and an opposite rear end 81b. A longitudinal centre axis 83 of the tool body 81 extends between the rear end 81b and the front end 81a of the tool body, wherein this centre axis 83 coincides with the axis of rotation 82 of the milling tool 80. A rear part of the tool body 81 forms a connection member 84, through which the tool body 81 is mountable, directly or via an intermediate tool holder, to a rotating spindle or the similar of a machine, for instance a milling machine. At the front end 81a, the tool body 81 is provided with an axially forwardly facing front face 81c. The tool body 81 also has a peripheral surface 81d that adjoins to the front face 81c and extends from the front face 81c toward the rear end 81b of the tool body.

The tool body 81 is provided with several insert seats 85 which are evenly or at least substantially evenly distributed in the circumferential direction of the tool body 81 and configured to receive a respective double-sided cutting insert 1. In the illustrated embodiment, the milling tool 80 is provided with double-sided cutting inserts 1 of the type illustrated in Figs 1a-1k. Each cutting insert 1 is configured to be detachably mounted in its associated insert seat 85. A chip pocket 86 is provided in the tool body 81 in front of each insert seat 85 as seen in the intended direction of rotation R of the tool body 81.

The cutting inserts 1 are made of hard and wear-resistant material, preferably cemented carbide, and the tool body 81 is preferably made of steel.

In the embodiment illustrated in Figs 4a-4c, the tool body 81 is provided with six insert seats 85 spaced apart in the circumferential direction of the tool body. However, the tool body 81 may as an alternative, inter alia depending on the diameter of the tool body, be provided with any other suitable number of insert seats 85. Each insert seat 85 is located at a transition between the front face 81c and the peripheral surface 81d of the tool body 81. Each insert seat 85 comprises a space configured to accommodate a double-sided cutting insert 1, wherein this space is open toward the front face 81c of the tool body 81 in order to allow a cutting insert 1 mounted in the insert seat 85 to project in the axial direction of the tool body 81 beyond the front end 81a thereof and also open toward the peripheral surface 81d of the tool body 81 in order to allow a cutting insert 1 mounted in the insert seat 85 to project in the radial direction of the tool body 81 beyond the peripheral surface 81d thereof.

Each insert seat 85 comprises a substantially tangentially facing bottom wall 87, a substantially tangentially facing top opening opposite to the bottom wall 87 and an internal wall 88 provided between the bottom wall 87 and the top opening. The top opening is facing the chip pocket 86 provided in front of the insert seat 85. The internal wall 88 extends transversely to the bottom wall 87 and delimits the cutting insert accommodating space together with the bottom wall 87. The internal wall 88 is provided with an axial support surface 89 configured to abut against the side abutment surface 13, 14 on one of the main side faces 11a-11d of a cutting insert 1 and a radial support surface 90 configured to abut against the side abutment surface 13, 14 on another one of the main side faces 11a-11d of the cutting insert 1. The bottom wall 87 of each insert seat 85 is provided with a planar tangential support surface 91 configured to abut against the tangential abutment surface 7a, 7b on one of the major faces 2, 3 of the cutting insert 1.

The through hole 5 in the cutting insert 1 is configured to receive a fastening element 6 in the form of a screw, by means of which the cutting insert 1 may be releasably fixed in the associated insert seat 85 of the tool body 81 in any of its working positions. The fastening element 6 is configured to extend through the through hole 5 in the cutting insert 1 and to be in threaded engagement with a screw hole 92 provided in the bottom wall 87 of the insert seat 85.

When mounted in one of the insert seats 85 in any of its working positions, the cutting insert 1 is configured to:
- abut against the radial support surface 90 on the internal wall 88 of the insert seat 85 through the side abutment surface 13, 14 on one of the main side faces 11a-11d of the cutting insert,
- abut against the axial support surface 89 on the internal wall 88 of the insert seat 85 through the side abutment surface 13, 14 on another one of the main side faces 11a-11d of the cutting insert, and
- abut against the tangential support surface 91 on the bottom wall 87 of the insert seat 85 through the tangential abutment surface7a, 7b on one of the two major faces 2, 3 of the cutting insert.

Each insert seat 85 is so designed that the cutting insert 1 is given a negative axial tipping-in angle and a negative radial tipping-in angle when mounted in the insert seat 85 in any of its working positions. In the illustrated embodiment of the tool body the axial tipping-in angle is -9° and the radial tipping in angle is -10°.

When the cutting insert 1 is mounted in the insert seat 85 in any of its working positions, one of the main cutting edges 21, 31 of the cutting insert is positioned to form an active main cutting edge in the milling tool 80, wherein the surface-wiping cutting edge 22, 32 in the same set of cutting edges as the active main cutting edge is positioned to form an active surface-wiping cutting edge in the milling tool 80.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A double-sided cutting insert for use in milling, the cutting insert (1) having an essentially quadratic basic shape and being turnable into eight different working positions and comprising:
- first and second major faces (2, 3) arranged on opposite sides of the cutting insert (1) and serving as top and bottom faces of the cutting insert, wherein the cutting insert (1) has a centre axis (C) that extends between the first and second major faces (2, 3) and a median plan (MP) that extends halfway between the first and second major faces (2, 3) perpendicularly to the centre axis (C), wherein the cutting insert (1) has 90° rotational symmetry about the centre axis (C), wherein the first major face (2) comprises a substantially planar first tangential abutment surface (7a) extending in a first plane (PL1) that is perpendicular to the centre axis (C), and wherein the second major face (3) comprises a substantially planar second tangential abutment surface (7b) extending in a second plane (PL2) that is perpendicular to the centre axis (C);
- a peripheral surface (10) extending around the cutting insert (1) between the first and second major faces (2, 3) and comprising:
• four main side faces (11a-11d), a first pair of which being arranged opposite to each other on two opposite sides of the cutting insert (1) and a second pair of which being arranged opposite to each other on two other opposite sides of the cutting insert (1), wherein the cutting insert (1) has a first transverse plane (TP1) that extends halfway between the two main side faces (11a, 11c) in said first pair and contains the centre axis (C) of the cutting insert and a second transverse plane (TP2) that extends halfway between the two main side faces (11b, 11d) in said second pair and contains the centre axis (C) of the cutting insert, and wherein each main side face (11a, 11c) in said first pair has 180° rotational symmetry about a first imaginary reference axis (A1) that extends along a line of intersection between the median plane (MP) and the second transverse plane (TP2), and each main side face (11b, 11d) in said second pair has 180° rotational symmetry about a second imaginary reference axis (A2) that extends along a line of intersection between the median plane (MP) and the first transverse plane (TP1), and
• four corner side faces (12), each of which being arranged between two adjacent main side faces (11a, 11b, 11c, 11d);
- four first main cutting edges (21) formed at an intersection between a respective one of the four main side faces (11a-11d) and the first major face (2);
- four second main cutting edges (31) formed at an intersection between a respective one of the four main side faces (11a-11d) and the second major face (3);
- four first surface-wiping cutting edges (22) formed at an intersection between a respective one of the four main side faces (11a-11d) and the first major face (2);
- four second surface-wiping cutting edges (32) formed at an intersection between a respective one of the four main side faces (11a-11d) and the second major face (3);
- four first curved corner cutting edges (23) formed at an intersection between a respective one of the four corner side faces (12) and the first major face (2), wherein each one of the first curved corner cutting edges (23) is located between one of the first main cutting edges (21) and one of the first surface-wiping cutting edges (22) with the first curved corner cutting edge (23) located ahead of the adjacent first main cutting edge (21) and behind the adjacent first surface-wiping cutting edge (22), as seen in a clockwise direction about the centre axis (C) of the cutting insert (1) when viewing the first major face (2) in a plan view along the centre axis (C); and
- four second curved corner cutting edges (33) formed at an intersection between a respective one of the four corner side faces (12) and the second major face (3), wherein each one of the second curved corner cutting edges (33) is located between one of the second main cutting edges (31) and one of the second surface-wiping cutting edges (32) with the second curved corner cutting edge (33) located ahead of the adjacent second main cutting edge (31) and behind the adjacent second surface-wiping cutting edge (32), as seen in a clockwise direction about the centre axis (C) of the cutting insert (1) when viewing the second major face (3) in a plan view along the centre axis (C),
wherein each main side face (11a, 11c) in said first pair comprises a substantially planar first side abutment surface (13) that is parallel to the first transverse plane (TP1) and extends from one of the four corner side faces (12) to another one of the four corner side faces (12), said first side abutment surface (13) having a first end (13a), through which it adjoins to the former corner side face (12), and an opposite second end (13b), through which it adjoins to the latter corner side face (12), and
wherein each main side face (11b, 11d) in said second pair comprises a substantially planar second side abutment surface (14) that is parallel to the second transverse plane (TP2) and extends from one of the four corner side faces (12) to another one of the four corner side faces (12), said second side abutment surface (14) having a first end (14a), through which it adjoins to the former corner side face (12), and an opposite second end (14b), through which it adjoins to the latter corner side face (12),
**characterized in that** each main side face (11a, 11c) in said first pair comprises an inclined clearance surface (40) that extends between the first side abutment surface (13) on the same main side face (11a, 11c) and the first major face (2) all along this first side abutment surface (13), wherein this clearance surface (40):
- has a first end (40a) at the first end (13a) of the associated first side abutment surface (13), and an opposite second end (40b) at the second end (13b) of the associated first side abutment surface (13),
- has a first longitudinal edge (41), through which it adjoins to the first major face (2), and an opposite second longitudinal edge (42), through which it adjoins to the associated first side abutment surface (13), these first and second longitudinal edges (41, 42) having a respective first end (41a, 42a) at the first end (40a) of the clearance surface (40) and a respective second end (41b, 42b) at the second end (40b) of the clearance surface (40), wherein said first longitudinal edge (41) has a first section (43) that extends from the first end (41a) of the first longitudinal edge (41) in a direction toward the second end (41b) thereof and that consists of one of said four first surface-wiping cutting edges (22), and an adjacent second section (44) that extends from the second end (41b) of the first longitudinal edge (41) in a direction toward the first end (41a) thereof and that consists of one of said four first main cutting edges (21),
- is inclined outwards from the first major face (2), such that its first longitudinal edge (41) is located closer to the first transverse plane (TP1) than its second longitudinal edge (42), as seen in any plane that is parallel to the second transverse plane (TP2) and extends across the clearance surface (40),
- is convexly curved, as seen in any plane that is perpendicular to the centre axis (C) of the cutting insert (1) and extends across any part of the clearance surface (40),
- has such shape that a perpendicular distance between said second longitudinal edge (42) and said second plane (PL2) has a minimum (d1ₘᵢₙ) at the second end (42b) of the second longitudinal edge (42) and a maximum (d1ₘₐₓ) at a peak point (45) on the second longitudinal edge (42) located in a plane (47) that is parallel to the second transverse plane (TP2) and intersects said first longitudinal edge (41) in a point (46) within the middle third of the longitudinal extension of said first section (43) of the first longitudinal edge (41), wherein said perpendicular distance is larger at the first end (42a) than at the second end (42b) of the second longitudinal edge (42), and
- has such shape that said second longitudinal edge (42) is gradually approaching said second plane (PL2) when moving along the second longitudinal edge (42) from said peak point (45) on the second longitudinal edge (42) to the first end (42a) thereof, and when moving along the second longitudinal edge (42) from said peak point (45) on the second longitudinal edge (42) to the second end (42b) thereof.

2. A double-sided cutting insert according to claim 1, **characterized in that** the peak point (45) on said second longitudinal edge (42) of said clearance surface (40) is located in a plane (47) that is parallel to the second transverse plane (TP2) and intersects said first longitudinal edge (41) of the clearance surface (40) in a midpoint (46) of the first section (43) of the first longitudinal edge (41).

3. A double-sided cutting insert according to claim 1 or 2, **characterized in that** the first section (43) of said first longitudinal edge (41) of said clearance surface (40) is parallel to the median plane (MP), as seen in a lateral view of the cutting insert (1) along the first imaginary reference axis (A1) toward the associated main side face (11a, 11c).

4. A double-sided cutting insert according to any of claims 1-3, **characterized in that** the first section (43) of said first longitudinal edge (41) of said clearance surface (40) is located further from the median plane (MP) than said first plane (PL1).

5. A double-sided cutting insert according to any of claims 1-3, **characterized in that** the first section (43) of said first longitudinal edge (41) of said clearance surface (40) is located closer to the median plane (MP) than said first plane (PL1).

6. A double-sided cutting insert according to any of claims 1-5, **characterized in that** the first section (43) and the second section (44) of said first longitudinal edge (41) of said clearance surface (40) meet each other at a transition point (48) on the first longitudinal edge (41), wherein the second section (44) of the first longitudinal edge (41) has a sloping first part (44a) that slopes toward the median plane (MP) from said transition point (48) to an adjacent second part (44b) of the second section (44) of the first longitudinal edge (41) such that the second section (44) of the first longitudinal edge (41) is gradually approaching the median plane (MP) when moving along the sloping first part (44a) in a direction away from said transition point (48).

7. A double-sided cutting insert according to claim 6, **characterized in that** the second section (44) of said first longitudinal edge (41) of said clearance surface (40) has a sloping third part (44c) that slopes toward the median plane (MP) from the second end (41b) of the first longitudinal edge (41) such that the second section (44) of the first longitudinal edge (41) is gradually approaching the median plane (MP) when moving along the sloping third part (44c) in a direction away from the second end (41b) of the first longitudinal edge (41).

8. A double-sided cutting insert according to claim 6 or 7, **characterized in that** each point of the second section (44) of said first longitudinal edge (41) of said clearance surface (40) is located closer to the median plane (MP) than said transition point (48).

9. A double-sided cutting insert according to any of claims 1-8, **characterized in that** said clearance surface (40) is inclined in relation to the associated first side abutment surface (13) at an angle (α) that is substantially the same in every plane that is parallel to the second transverse plane (TP2) and intersects the clearance surface (40) and the associated first side abutment surface (13).

10. A double-sided cutting insert according to claim 9, **characterized in that** said angle (α) is 1-6°, preferably 1-3°, and more preferably 2°.

11. A double-sided cutting insert according to any of claims 1-10, **characterized in that** said clearance surface (40) extends in a circular arc, as seen in any plane that is perpendicular to the centre axis (C) of the cutting insert (1) and extends across any part of the clearance surface (40).

12. A double-sided cutting insert according to claim 11, **characterized in that** said circular arc has its centre of curvature (CC) located in a plane (47) that is parallel to the second transverse plane (TP2) and intersects said second longitudinal edge (42) of said clearance surface (40) in said peak point (45) on the second longitudinal edge (42).

13. A double-sided cutting insert according to any of claims 1-10, **characterized in that** said clearance surface (40) extends in an elliptical arc, as seen in any plane that is perpendicular to the centre axis (C) of the cutting insert (1) and extends across any part of the clearance surface (40).

14. A double-sided cutting insert according to any of claims 1-13, **characterized in that** the cutting insert (1) has 180° rotational symmetry about the first imaginary reference axis (A1) and about the second imaginary reference axis (A2).

15. A milling tool comprising at least one double-sided cutting insert (1) according to any of claims 1-14.
